# EUROPÄISCHE PATENTANMELDUNG

(11) **EP 3 272 499 A1**
(43) Veröffentlichungstag der Anmeldung: **24.01.2018**
(21) Anmeldenummer: 17171763.0
(22) Anmeldetag: 18.05.2017
(51) Int. Cl.: B29C 51/04, B29C 51/26, B29C 51/30, B29C 51/38

(54) **VORRICHTUNG UND VERFAHREN ZUM THERMOFORMEN, INSBESONDERE FÜR EIN MIT EINEM LEBENSMITTEL BEFÜLLBAREN BEHÄLTNIS**

(30) Priorität: 22.07.2016 DE 102016213430
(71) Anmelder: Robert Bosch GmbH, 70442 Stuttgart (DE)
(72) Erfinder: Mueller, Peter, 73557 Mutlangen (DE); Becker, Boris, 70736 Fellbach (DE)

(57) **Zusammenfassung**

Es werden eine Vorrichtung und ein Verfahren zum Thermoformen vorgeschlagen, wobei die Vorrichtung zumindest eine Formeinrichtung (15) zum Thermoformen einer Packstoffbahn (10) umfasst, so dass ein Behältnis entsteht, wobei zumindest eine Zuführung (22) vorgesehen ist, die zumindest einen Sterilanten der Formeinrichtung (15) zuführt.

## Beschreibung

### Stand der Technik

Die vorliegende Erfindung betrifft eine Vorrichtung und ein Verfahren zum Thermoformen, insbesondere für ein mit einem Lebensmittel befüllbaren Behältnis, nach der Gattung der unabhängigen Ansprüche.

Aus der DE 3029685 A1 sind bereits ein Verfahren und eine Vorrichtung zum Sterilisieren von Behältern bekannt. Während der Wärmebehandlung wird die Außenseite eines durch Verstrecken einer Packstoffbahn geformten Behälters gekühlt. In einer nachfolgenden Station erfolgt die Sterilisierung des geformten Behälters. Diese Anordnung benötigt relativ viel Platz. Form-und Sterilisationsprozess sind nicht aufeinander abgestimmt.

Es ist Aufgabe der vorliegenden Erfindung, den Stand der Technik weiter zu verbessern. Diese Aufgabe wird gelöst durch die Merkmale der unabhängigen Ansprüche.

### Vorteile der Erfindung

Die erfindungsgemäße Vorrichtung und das erfindungsgemäße Verfahren mit den Merkmalen der unabhängigen Ansprüche haben demgegenüber den Vorteil, dass sich die Baugröße der Maschine reduzieren kann. Dies ermöglicht eine kompaktere Bauweise. Außerdem können Sterilanten bzw. Sterilmittel eingespart werden.

Hierzu wird während des Thermoformprozesses in der Formstation selbst bereits die Sterilisierung vorgenommen. Dies wird erfindungsgemäß dadurch erreicht, dass zumindest eine Zuführung vorgesehen ist, die zumindest einen Sterilanten der Formeinrichtung, über die ein Behältnis aus einer Packstoffbahn im Rahmen eines Thermoformprozesses hergestellt wird, zuführt.

In einer zweckmäßigen Weiterbildung ist vorgesehen, dass die Formeinrichtung zumindest einen Vorstreckstempel und/oder eine Tiefziehform umfasst, wobei der Sterilant über zumindest eine Öffnung in den Vorstreckstempel und/oder die Tiefziehform zuführbar ist. Dadurch kann zielgenau der Sterilant der zu erstellenden Innenseite des Behältnisses über den Vorstreckstempel noch während des Formprozesses zugeführt werden. Alternativ oder parallel könnte ein gegebenenfalls auch unterschiedlicher Sterilant über die Tiefziehform der Außenseite bzw. Unterseite des zu formenden Behältnisses an der gewünschten Stelle zugeführt werden. Vorstreckstempel und/oder Tiefziehform sind ohnehin vorhanden, sodass bei deren Verwendung zur Zuführung des gewünschten Sterilmittels (Sterilant) auf eine separate Zuführungsvorrichtung verzichtet werden kann. Dadurch reduziert sich der Platzbedarf und die Komplexität der Vorrichtung.

In einer zweckmäßigen Weiterbildung ist zumindest ein Druckerzeugungsmittel vorgesehen, um eine vorgestreckte Packstoffbahn in die Tiefziehform zu drücken unter Verwendung eines Sterilanten, vorzugsweise ein steriles Gas bzw. Luft. Auch dadurch kann der Platzbedarf der Vorrichtung verringert werden, da ohnehin für den Thermoformprozess verwendete Komponenten lediglich mit dem geeigneten Sterilmittel beaufschlagt werden müssen.

In einer zweckmäßigen Weiterbildung sind mehrere Vorstreckstempel vorgesehen, die mit der Zuführung verbunden sind. Dadurch lassen sich die Ausbringungsleistungen der Maschine unter Beibehaltung einer einfachen Sterilisation erhöhen.

In einer zweckmäßigen Weiterbildung ist vorgesehen, dass die Öffnung im Bereich des Bodens der Tiefziehform angeordnet ist. An dieser Stelle lässt sich besonders einfach das Sterilmittel zur Sterilisierung des Außenbereichs des Behältnisses zuführen. Besonders zweckmäßig lässt sich der Sterilant über zumindest eine Öffnung benachbart zu dem Vorstreckstempel zuführen. Damit können zuverlässig die Oberseiten der Verpackungen sterilisiert werden.

Das erfindungsgemäße Verfahren zum Thermoformen, umfassend zumindest eine Formeinrichtung zum Thermoformen einer Packstoffbahn, so dass ein Behältnis entsteht, zeichnet sich dadurch aus, dass zumindest ein Sterilant der Formeinrichtung zugeführt wird.

Besonders zweckmäßig zeichnet sich das Verfahren durch folgende weitere Schritte aus:
- Relativbewegung zwischen zumindest einem Vorstreckstempel und einer Tiefziehform als Bestandteile der Formeinrichtung,
- Vorstrecken der Packstoffbahn durch den Vorstreckstempel,
- Einbringen eines Sterilanten in die Formeinrichtung und/oder
- Zurückziehen des Vorstreckstempels.

Gerade durch das Vorsehen des Sterilisierens während üblicher Formvorgänge kann die Komplexität der Vorrichtung weiter verringert werden. Durch die zielgenaue Zuführung des Sterilmittels an den gewünschten Stellen schon während des Thermoformprozesses kann Sterilmittel eingespart werden.

Besonders zweckmäßig wird in einem weiteren Schritt unter Verwendung des Sterilanten ein Druck auf die vorgestreckte Packstoffbahn erzeugt, so dass die Packstoffbahn in die Tiefziehform gepresst wird. Dadurch wird in nur einem einzigen Arbeitsschritt sowohl das Formen wie auch das Sterilisieren zugleich realisiert.

In einer zweckmäßigen Weiterbildung ist vorgesehen, dass unterschiedliche Sterilanten während des Tiefziehvorgangs zugeführt werden, insbesondere ein steriles Gas bzw. Luft, Sattdampf, Wasserstoffperoxid, PAA. Damit kann zielgenau der gewünschte Sterilitätsgrad, der beispielsweise für die Innenseite und die Außenseite des Behältnisses unterschiedlich sein kann, erreicht werden. Weitere zweckmäßige Weiterbildungen ergeben sich aus weiteren abhängigen Ansprüchen und aus der Beschreibung.

### Zeichnung

Ausführungsbeispiele der erfindungsgemäßen Vorrichtung sind in der Zeichnung dargestellt und werden nachfolgend näher beschrieben.

Es zeigen:
Figur 1 eine perspektivische Ansicht einer Thermoformeinrichtung,
die Figuren 2 bis 7 unterschiedliche Schritte beim Thermoformen und Sterilisieren eines zu erstellenden Behältnisses.

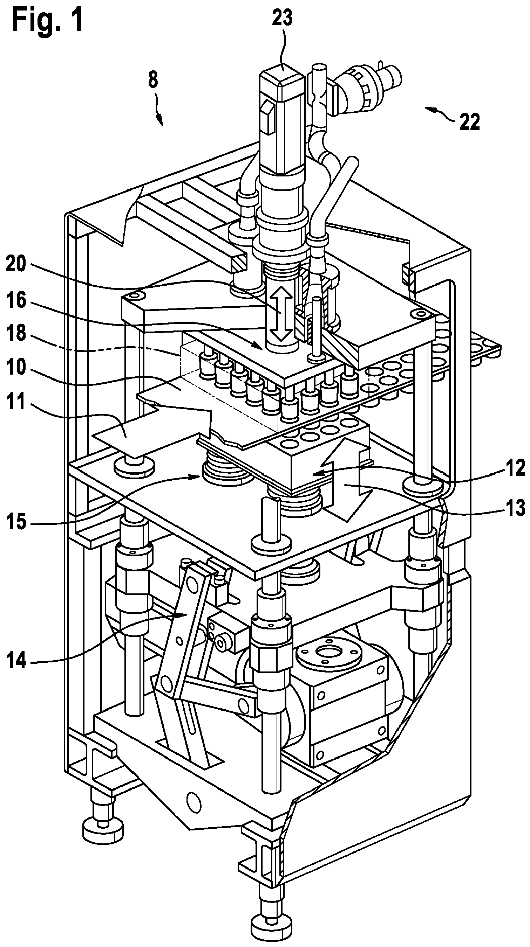

Das Ausführungsbeispiel gemäß Figur 1 zeigt eine Thermoformeinrichtung 8 als Teil einer Thermoformanlage. Eine Thermoformeinrichtung 8 erstellt Behältnisse 26, die nach Verlassen der Thermoformeinrichtung 8 mit einem Lebensmittel, beispielsweise ein pastöses Produkt wie Joghurt oder ähnliches, befüllt und anschließend mit einer Deckfolie, beispielsweise aus Aluminium, an ihrer Oberseite dicht verschlossen werden.

Eine Formeinrichtung 15 der Thermoformeinrichtung 8 besteht aus zumindest einem Vorstreckstempel 16, vorzugsweise mehrere Vorstreckstempel 16, der relativ zu einer Tiefziehform 12 beweglich angeordnet ist. Die Tiefziehform 12 weist üblicherweise eine Vielzahl von Aufnahmen auf, um aus einer Packstoffbahn 10 gleichzeitig mehrere Behältnisse 26 zu erstellen. In entsprechender Anzahl sind Vorstreckstempel 16 vorgesehen, die in die entsprechenden Aufnahmen der Tiefziehform 12 eintauchen. Die Form der Vorstreckstempel 16 ist auf die Form der Aufnahmen der Tiefziehform 12 abgestimmt. Außerdem ist zumindest eine Maske 18 vorgesehen, die oberhalb der Tiefziehform 12 angeordnet ist. Zwischen den Vorstreckstempeln 16 und der Tiefziehform 12 befindet sich die Packstoffbahn 10, aus der durch die Thermoformeinrichtung 8 Behältnisse 26 hergestellt werden. Die Packstoffbahn 10 wird nach erfolgtem Tiefziehvorgang in Transportrichtung 11, angedeutet durch einen entsprechenden Pfeil, weiterbewegt. Senkrecht zur Transportrichtung 11 der Packstoffbahn 10 lässt sich der Vorstreckstempel 16 in Bewegungsrichtung 20 verfahren. Auch die Tiefziehform 12 lässt sich senkrecht zur Transportrichtung 11 der Packstoffbahn 10 in Bewegungsrichtung 13 verfahren. Eine entsprechende Bewegung der Formeinrichtung 15 bzw. der Tiefziehform 12 übernimmt ein Antrieb 14. Der Antrieb 14 ist hierzu unterhalb der Tiefziehform 12 angeordnet. Über einen weiteren Antrieb 23 erfolgt die Bewegung der Vorstreckstempel 16 und/oder der Maske 18. Die Maske 18 umgibt die Vorstreckstempel 16 und dient für sie als Aufnahme. Vorstreckstempel 16 und Maske 18 können relativ zueinander bewegt werden.

Außerdem ist eine Zuführung 22 für einen Sterilant 28 vorgesehen. Zum Sterilisieren gelangt der Sterilant 28 wie später beschrieben in die Formeinrichtung 15. Dies könnte über die Vorstreckstempel 16 und/oder die Unterseite der Tiefziehform 12 erfolgen. Die Zuführung 22 ist beispielsweise als Rohrsystem ausgebildet. Dieses mündet in eine Verteilplatte, über die jeweils der Sterilant 28 in das Innere der jeweiligen Stempel 16 gelangt. Gleichwohl können auch Öffnungen vorgesehen seien, die ein Ausströmen des Sterilanten 28 an den Stempeln 16 vorbei in Richtung zur Oberseite der Packstoffbahn 10 bzw. der Innenseite des geformten Behältnisses 26 zulassen.

Über die Zuführung 22 können auch unterschiedliche Sterilanten 28 je nach Prozessschritt der Formeinrichtung 15 zugeführt werden. So könnte beispielsweise in einem Zyklus ein steriles Gas oder sterile Luft 24 unter Druck zugeführt werden. Anschließend könnte über diese Zuführung 22 ein weiterer Sterilant 28 wie bei beispielsweise Wasserstoffperoxid oder Ähnliches der Formeinrichtung 15 zugeführt werden. Alternativ könnten auch unterschiedliche Zuführungen 22 für unterschiedliche Sterilanten 24,28 vorgesehen sein.

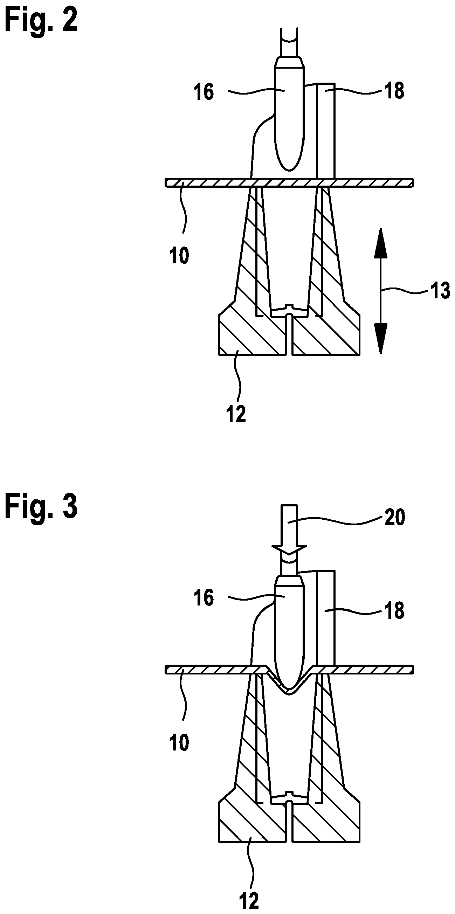

Die Betriebsweise der Thermoformeinrichtung 8 wird in Verbindung mit den Figuren 2-7 näher beschrieben. Die Packstoffbahn 10 gelangt zwischen die Tiefziehform 12, die Vorstreckstempel 16 und Maske 18. Die Packstoffbahn 10 wurde in einer nicht näher beschriebenen Heizeinrichtung vorgewärmt auf die gewünschte Temperatur, die sich für das Thermoformen eignet. Diese Temperatur könnte beispielsweise im Bereich zwischen 120° und 160 °C liegen. Gemäß Figur 2 werden die Tiefziehform 12 und die Maske 18 relativ zueinander so verfahren, dass die Packstoffbahn 10 fixiert bzw. geklemmt ist. Der Vorstreckstempel 16 befindet sich noch oberhalb der Oberseite der Packstoffbahn 10. Es wird noch kein Sterilant 28 in diesem Zustand zugeführt.

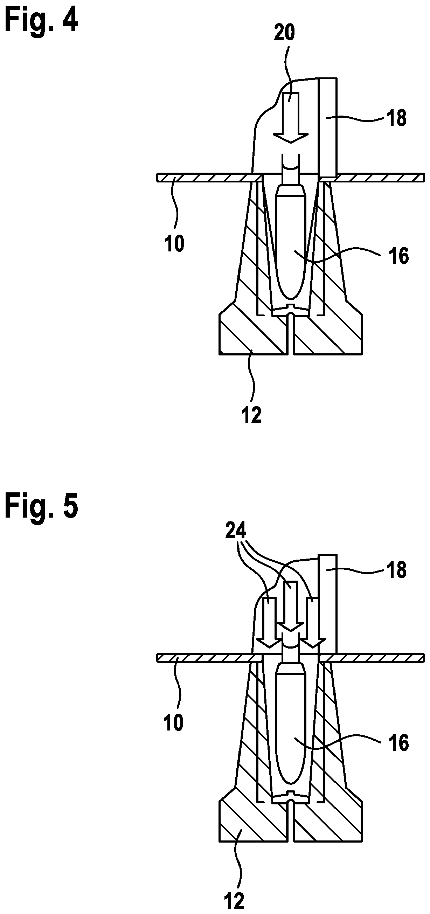

In einem nächsten Schritt gemäß Figur 3 bewegt sich der Vorstreckstempel 16 in Bewegungsrichtung 20 hin zu der Oberseite der Packstoffbahn 10 und bewegt diese in Richtung der Unterseite der Tiefziehform 12. Dies geschieht so lange, bis die Position in Figur 4 erreicht ist. Die Packstoffbahn 10 wurde entsprechend gedehnt bzw. vorgestreckt. Allerdings ist die gedehnte Packstoffbahn 10 noch nicht überall in Kontakt mit der Tiefziehform 12. Dies erfolgt wie in Figur 5 angedeutet unter Beaufschlagung mit Druckluft bzw. mit einem unter Druck stehenden Gas. Die Luft bzw. das Gas wird nun bereits mit einem Sterilant 24,28, versetzt, so dass beispielsweise Sterilluft als Mittel zur Druckerzeugung entsteht. Dadurch wird die gestreckte Packstoffbahn 10 in die Tiefziehform 12 gepresst und nimmt so die gewünschte Form des dann entstehenden Behältnisses 26 an. In diesem Schritt könnte wie beschrieben die Zuführung 22 im Sinne einer Zuführung eines Sterilanten 24,28 angesteuert sein.

Anschließend bewegt sich der Vorstreckstempel 16 wieder aus der Tiefziehform 12 heraus. Während dieses Vorgangs wird ein Sterilant 28, der durch die Zuführung 22 in die Formeinrichtung 15 gelangt, zugeführt. Diese Zuführung kann über die Innenseite des Vorstreckstempel 16, beispielsweise durch im Stempel 16 entsprechend ausgebildete Öffnungen erfolgen. Alternativ oder zusätzlich könnte der Sterilant 28 auch seitlich von dem Vorstreckstempel 16 bzw. zwischen Stempel 16 und Maske 18 der Innenseite des neu entstandenen Behältnisses 26 zugeführt werden.

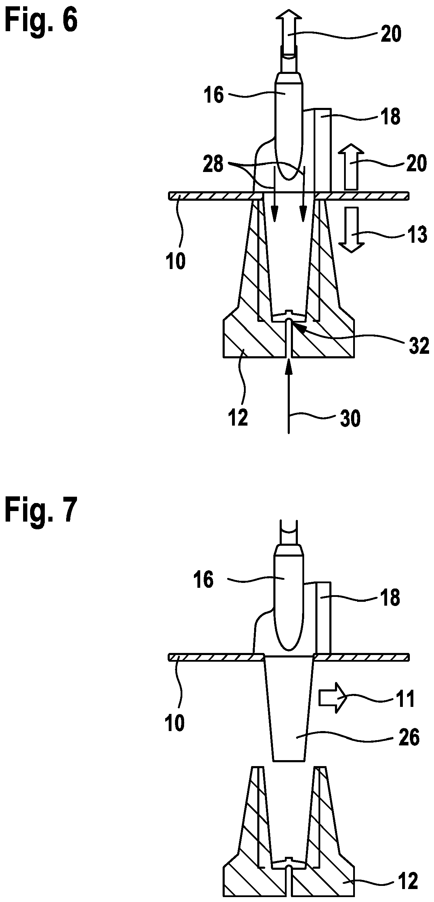

Zusätzlich oder alternativ könnte der Sterilant 28 auch über die Tiefziehform 12 der Außenseite des neu entstandenen Behältnisses 26 zugeführt werden. Hierzu könnte beispielsweise eine entsprechende Zuführung(en) 32, beispielsweise in Form eines Kanals oder sonst geeigneten Geometrie vorgesehen werden. Hierbei könnte ein weiterer Sterilant 30 Verwendung finden. Dieser könnte sich unterscheiden von demjenigen Sterilanten 28, der für die Innenseite des Behältnisses 26 verwendet wurde. Es kann jedoch auch derselbe Sterilant 28 verwendet werden. Gemäß Figur 6 wird die Tiefziehform 12 abgesenkt. Parallel oder danach könnte auch die Maske 18 angehoben werden. Die Tiefziehform 12 wird jedenfalls so weit abgesenkt, dass ein kollisionsfreier Weitertransport des Behältnisses 26 in Transportrichtung 11 der Packstoffbahn 10 erfolgen kann. Dies ist in Figur 7 dargestellt. Dann wiederholen sich die bereits in Verbindung ab Figur 2 beschriebenen Schritte.

Über diese Thermoformeinrichtung 8 erfolgt sowohl das Formen des Behältnisses 26 wie auch zugleich das Sterilisieren. Gerade durch die Verwendung von steriler Luft 24 oder einem sonstigen sterilen Gas bei der Aufbringung des Druckstoßes, der die die gestreckte Packstoffbahn 10 in die Tiefziehform 12 zwingt, wird schon ein Sterilisieren der Innenseite des entstandenen Behältnisses 26 erreicht. Außerdem kann durch die Zuführung eines geeigneten Sterilanten 28 über den Vorstreckstempel 16 zielgenau die Innenseite des Behältnisses 26 erreicht werden. Dadurch wird es möglich, eine geringere Menge an Sterilant 28 zu verwenden bei hinreichender Sterilisierung.

Eventuell schließt sich an den Schritt gemäß Figur 7 noch eine Station mit UV-Licht an zum Nachtrocknen und/oder zum weiteren Sterilisieren.

Als Sterilant 24, 28, 30 kommen beispielsweise Wasserstoffperoxid, Sattdampf, Poly Acrylic Acid (PAA), sterile Luft, steriles Gas oder sonstige geeignete Mittel zum Einsatz.

Die Vorrichtung und das Verfahren zum Thermoformen werden insbesondere in der Verpackungstechnik eingesetzt. Die Verwendung ist hierauf jedoch hierauf nicht eingeschränkt.

## Patentansprüche

1. Vorrichtung zum Thermoformen, umfassend zumindest eine Formeinrichtung (15) zum Thermoformen einer Packstoffbahn (10), so dass ein Behältnis (12) entsteht, **dadurch gekennzeichnet, dass** zumindest eine Zuführung (22) vorgesehen ist, die zumindest einen Sterilanten (24, 28,30) der Formeinrichtung (15) zuführt.

2. Vorrichtung nach Anspruch 1, **dadurch gekennzeichnet, dass** die Formeinrichtung (15) zumindest einen Vorstreckstempel (16) und/oder eine Tiefziehform (12) umfasst, wobei der Sterilant (24, 28, 30) über zumindest eine Öffnung (32) in den Vorstreckstempel (16) und/oder die Tiefziehform (12) zuführbar ist.

3. Vorrichtung nach einem der vorhergehenden Ansprüche, **dadurch gekennzeichnet, dass** zumindest ein Druckerzeugungsmittel vorgesehen ist, um eine vorgestreckte Packstoffbahn (10) in die Tiefziehform (12) zu drücken unter Verwendung eines Sterilanten (24), vorzugsweise ein steriles Gas bzw. Luft.

4. Vorrichtung nach einem der vorhergehenden Ansprüche, **dadurch gekennzeichnet, dass** mehrere Vorstreckstempel (16) vorgesehen sind, die mit der Zuführung (22) verbunden sind.

5. Vorrichtung nach einem der vorhergehenden Ansprüche, **dadurch gekennzeichnet, dass** die Öffnung (32) im Bereich des Bodens der Tiefziehform (12) angeordnet ist.

6. Vorrichtung nach einem der vorhergehenden Ansprüche, **dadurch gekennzeichnet, dass** der Sterilant (24, 28, 30) über zumindest eine Öffnung benachbart zu dem Vorstreckstempel (16) zugeführt ist.

7. Verfahren zum Thermoformen, umfassend zumindest eine Formeinrichtung (15) zum Thermoformen einer Packstoffbahn (10), so dass ein Behältnis (12) entsteht, **dadurch gekennzeichnet, dass** zumindest ein Sterilant (24, 28,30) der Formeinrichtung (15) zugeführt wird.

8. Verfahren nach dem vorhergehenden Verfahrensanspruch, **gekennzeichnet durch** folgende weitere Schritte:
- Relativbewegung zwischen zumindest einem Vorstreckstempel (16) und einer Tiefziehform (12) als Bestandteile der Formeinrichtung (15),
- Vorstrecken der Packstoffbahn (10) durch den Vorstreckstempel (16),
- Einbringen eines Sterilanten (24, 28, 30).

9. Verfahren nach einem der vorhergehenden Verfahrensansprüche, **dadurch gekennzeichnet, dass** in einem weiteren Schritt der Vorstreckstempel (16) zurückgezogen wird.

10. Verfahren nach einem der vorhergehenden Verfahrensansprüche, **dadurch gekennzeichnet, dass** unter Verwendung des Sterilanten (24, 28,30) ein Druck auf die vorgestreckte Packstoffbahn (10) erzeugt wird, so dass die Packstoffbahn (10) in die Tiefziehform (12) gepresst wird.

11. Verfahren nach einem der vorhergehenden Verfahrensansprüche, **dadurch gekennzeichnet, dass** der Sterilant (24, 28,30) über zumindest eine Öffnung des Vorstreckstempels (16) und/oder der Tiefziehform (12) zugeführt wird.

12. Verfahren nach einem der vorhergehenden Verfahrensansprüche, **dadurch gekennzeichnet, dass** unterschiedliche Sterilanten (24, 28,30) während des Tiefziehvorgangs zugeführt werden, insbesondere ein steriles Gas bzw. Luft, Sattdampf, Wasserstoffperoxid, PAA.

13. Verfahren nach einem der vorhergehenden Verfahrensansprüche, **dadurch gekennzeichnet, dass** in einem weiteren Schritt die Packstoffbahn (10) geklemmt wird, vorzugsweise bevor die Packstoffbahn (10) vorgestreckt wird.
